# EUROPÄISCHE PATENTSCHRIFT

(11) **EP 3 195 009 B1**
(45) Veröffentlichungstag und Bekanntmachung des Hinweises auf die Patenterteilung: **26.02.2020**
(21) Anmeldenummer: 15753376.1
(22) Anmeldetag: 24.08.2015
(51) Int. Cl.: G01S 15/93, G01S 7/52

(54) **VERFAHREN ZUM BETREIBEN EINER ULTRASCHALLSENSORVORRICHTUNG EINES KRAFTFAHRZEUGS, ULTRASCHALLSENSORVORRICHTUNG, FAHRERASSISTENZSYSTEM SOWIE KRAFTFAHRZEUG**
METHOD FOR OPERATING AN ULTRASONIC SENSOR DEVICE OF A MOTOR VEHICLE, ULTRASONIC SENSOR DEVICE, DRIVER ASSISTANCE SYSTEM, AND MOTOR VEHICLE
PROCÉDÉ DE FONCTIONNEMENT D'UN DISPOSITIF DE DÉTECTION PAR ULTRASONS D'UN VÉHICULE AUTOMOBILE, DISPOSITIF DE DÉTECTION PAR ULTRASONS, SYSTÈME D'AIDE AU CONDUCTEUR ET VÉHICULE AUTOMOBILE

(30) Priorität: 16.09.2014 DE 102014113293
(43) Veröffentlichungstag der Anmeldung: 26.07.2017
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE)
(74) Vertreter: Enge, Sebastian
(86) Internationale Anmeldenummer: PCT/EP2015/069303
(87) Internationale Veröffentlichungsnummer: WO 2016/041737

(56) Entgegenhaltungen:
- EP-A1- 2 523 015
- DE-A1- 19 805 515
- US-A1- 2007 008 819

## Beschreibung

Die vorliegende Erfindung betrifft ein Verfahren zum Betreiben einer Ultraschallsensorvorrichtung eines Kraftfahrzeugs, bei welchem mittels zumindest eines Ultraschallsensors einer Mehrzahl von Ultraschallsensoren der Ultraschallsensorvorrichtung zum Detektieren eines Objekts in einem Umgebungsbereich des Kraftfahrzeugs in zumindest einem Messzyklus ein Sendesignal ausgesendet wird und zumindest ein Echo des Sendesignals empfangen wird sowie mittels einer Steuereinrichtung ein Bereich zum Anordnen einer Anhängevorrichtung des Kraftfahrzeugs bei dem Detektieren des Objekts ausgeblendet wird. Die Erfindung betrifft außerdem eine Ultraschallsensorvorrichtung für ein Kraftfahrzeug. Ferner betrifft die Erfindung ein Fahrerassistenzsystem mit einer solchen Ultraschallsensorvorrichtung. Schließlich betrifft die vorliegende Erfindung ein Kraftfahrzeug mit einem solchen Fahrerassistenzsystem.

Fahrerassistenzeinrichtungen, wie beispielsweise ein Parkassistenzsystem oder ein ACC (Adaptive Cruise Control)-System sind aus dem Stand der Technik bekannt. Derartige Fahrerassistenzsysteme umfassen üblicherweise eine Ultraschallsensorvorrichtung, die am Kraftfahrzeug angeordnet ist, und mittels Ultraschallsensoren den Umgebungsbereich des Kraftfahrzeugs beispielsweise dahingehend erfassen, ob Objekte detektiert werden, die für das weitere Fortbewegen des Kraftfahrzeugs im Weg sind.

Ein Ultraschallsensor sendet bekanntlich ein Sendesignal, welches ein Schallsignal ist, aus. Das Sendesignal reflektiert dann an Hindernissen bzw. Objekten und wird wieder durch den Ultraschallsensor empfangen, nämlich als Echo. Anhand des empfangenen Echos kann der Abstand zwischen dem Objekt und dem Kraftfahrzeug bestimmt werden. Der Abstand wird dabei in Abhängigkeit von einer Laufzeit des Echos ermittelt, wobei hier eine Zeitdauer zwischen dem Sendezeitpunkt und dem Empfangszeitpunkt gemessen wird. Diese sogenannte direkte Messung basiert somit auf dem Aussenden eines Sendesignals und einem Empfangen eines diesbezüglichen Echosignals durch den gleichen Ultraschallsensor. Darüber hinaus ist es auch bekannt, eine sogenannte indirekte Messung vorzunehmen. Bei dieser wird von einem Ultraschallsensor ein Sendesignal ausgesendet, an dem Objekt reflektiert und das diesbezügliche Echo wird von einem anderen Ultraschallsensor der Ultraschallsensorvorrichtung empfangen.

Ein Problem kann sich dann ergeben, wenn am Fahrzeug angeordnete Elemente, wie beispielsweise eine Anhängevorrichtung bzw. eine Anhängerkupplung, vorhanden sind. Eine derartige Anhängevorrichtung stellt aus Sicht des Ultraschallsensor ein reales, zu detektierendes Objekt dar. Die Ultraschallsignale werden von dieser Anhängevorrichtung reflektiert und vom Ultraschallsensor empfangen.

Weiterhin ist es aus dem Stand der Technik bekannt, Abstandssensoren dazu zu verwenden, die Position einer Anhängevorrichtung und/oder eines Anhängers zu bestimmen. Hierzu beschreibt die DE 10 2010 004 920 A1 eine Vorrichtung zur Unterstützung des Ankuppelns eines Anhängers an eine Anhängerkupplung. Dabei wird anhand der Signale Ultraschallsensoren eine Relativposition der Anhängerkupplung des Anhängers zu der Anhängerkupplung des Kraftfahrzeugs bestimmt.

Darüber hinaus sind Ausführungen bekannt, bei denen im Heckbereich des Fahrzeugs einer der Ultraschallsensoren genau auf einer derartigen Längsachse, auf welcher sich auch die Anhängerkupplung befindet, angeordnet ist. Dies ist beispielsweise aus der EP 0 610 702 A2 bekannt. Dort ist auch beschreiben, dass mit Hilfe eines Ultraschallsensors eine Lagepositionierung eines Deichselkopfes in Bezug auf ein am Kraftfahrzeug vorhandenes Kupplungsmaul möglich ist.

Bei Fahrzeugen, bei welchen die Ultraschallsensoren symmetrisch zur Fahrzeuglängsachse angeordnet sind und die Ultraschallsensoren paarweise angeordnet sind, kann eine Ausblendung der Anhängerkupplung verhältnismäßig einfach erfolgen. In vielen Fällen genügt hierbei eine Veränderung der Sensorschwellwerte im Nahbereich. Dies bedeutet, dass beispielsweise eine vorbestimmte Anzahl der Sensoren mit einer geringeren Empfindlichkeit betrieben wird. Teilweise ist eine zusätzliche Ausblendung eines bestimmten, bekannten Abstands notwendig.

Hierzu ist aus der DE 10 2011 101 013 A1 ist ein Verfahren zum Ausblenden eines irrelevanten Objekts beim Detektieren eines Hindernisses bekannt. Dabei wird überprüft, ob ein vorbestimmtes Kriterium bezüglich einer Amplitude eines Echos erfüllt ist. Das Echo wird als zu dem irrelevanten Objekt gehörend interpretiert, falls ein Empfangszeitpunkt des Echos innerhalb eines vorgegebenen Zeitfensters liegt und außerdem das Kriterium erfüllt ist.

Eine weitaus kompliziertere Situation ergibt sich bei den nachgerüsteten Anhängerkupplungen, bei denen die Position nicht bekannt ist. Eine zusätzliche Steigerung der Komplexität erfolgt hierbei in Kombination mit Niedrigpreisfahrzeugen, bei denen üblicherweise weniger Fahrzeugeinformationen zur Verfügung stehen.

Beispielsweise steht hier keine Information über die aktuelle Fahrzeuggeschwindigkeit und die Fahrtrichtung zur Verfügung. Die Patentanmeldung US 2007/0008819 offenbart eine Methode zur Detektion einer Anhängerkupplung am Fahrzeug basierend auf einer Kalibrierung in einer Umgebung, in der keine weiteren Hindernisse außer der Kupplung für die Sensoren wahrnehmbar sind. Die Patentanmeldung DE 19805515-A1 offenbart eine weitere Methode zur Detektion einer Anhängerkupplung am Fahrzeug basierend darauf ob sich der Abstand des erkannten Objekts bei einer Bewegung des Fahrzeugs ändert.

Es ist Aufgabe der vorliegenden Erfindung, eine Lösung aufzuzeigen, wie eine Ultraschallsensorvorrichtung der eingangs genannten Art bei einem Kraftfahrzeug mit einer nachgerüsteten oder abnehmbaren Anhängevorrichtung zuverlässiger betrieben werden kann.

Diese Aufgabe wird erfindungsgemäß durch ein Verfahren, durch eine Ultraschallsensorvorrichtung, durch ein Fahrerassistenzsystem sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Betreiben einer Ultraschallsensorvorrichtung eines Kraftfahrzeugs. Hierbei wird mittels zumindest eines Ultraschallsensors einer Mehrzahl von Ultraschallsensoren der Ultraschallsensorvorrichtung zum Detektieren eines Objekts in einem Umgebungsbereich des Kraftfahrzeugs in zumindest einem Messzyklus ein Sendesignal ausgesendet und zumindest ein Echo des Sendesignals empfangen. Darüber hinaus wird mittels einer Steuereinrichtung ein Bereich zum Anordnen einer Anhängevorrichtung des Kraftfahrzeugs beim Detektieren des Objekts ausgeblendet. Zudem wird die Ultraschallsensorvorrichtung für eine vorbestimmte zeitliche Dauer in einem Erfassungsbetrieb betrieben, in welchem ein Vorhandensein der Anhängevorrichtung an dem Kraftfahrzeug anhand des zumindest einen empfangenen Echos und der Bereich in Abhängigkeit von dem Vorhandensein der Anhängerkupplung angepasst wird.

Die Ultraschallsensorvorrichtung umfasst eine Mehrzahl von Ultraschallsensoren. Diese dienen zum Detektieren zumindest eines Objekts in dem Umgebungsbereich des Kraftfahrzeugs. Dabei kann mittels der Ultraschallsensorvorrichtung ermittelt werden, ob sich ein Objekt in dem Umgebungsbereich des Kraftfahrzeugs befindet. Weiterhin ist es vorgesehen, dass ein Abstand zu dem Objekt in dem Umgebungsbereich bestimmt wird. Hierzu sendet zumindest ein Ultraschallsensor der Ultraschallsensorvorrichtung ein Sendesignal aus, welches an dem Objekt reflektiert wird und wieder zu der Ultraschallsensorvorrichtung gelangt. Es wird also das Echo des Sendesignals empfangen. Anhand der Laufzeit des Sendesignals, also einem zeitlichen Unterschied zwischen einem Sendezeitpunkt, an dem das Sendesignal ausgesendet wird, und einem Empfangszeitpunkt, an dem das Echo des Sendesignals empfangen wird, kann der Abstand zu dem Objekt bestimmt werden. Mittels der Steuereinrichtung kann der Bereich zum Anordnen einer Anhängevorrichtung bestimmt werden. Dieser Bereich stellt den Bereich in und/oder an einem Heckbereich des Kraftfahrzeugs dar, in welchem eine Anhängevorrichtung bzw. eine Anhängerkupplung positioniert werden kann. Dieser Bereich wird beim Detektieren des Objekts anhand der empfangenen Echos nicht berücksichtigt.

Bei dem Verfahren wird also das Vorhandensein einer Anhängevorrichtung automatisch erkannt. Das Verfahren eignet sich insbesondere für Kraftfahrzeuge, bei denen eine solche Anhängevorrichtung nachgerüstet wurde. Außerdem eignet sich das Verfahren insbesondere für Kraftfahrzeuge mit einer abnehmbaren Anhängevorrichtung bzw. Anhängerkupplung. Beim Aktivieren der Ultraschallsensorvorrichtung wird die Ultraschallsensorvorrichtung für eine vorbestimmte zeitliche Dauer in einem Erfassungsbetrieb betrieben. In dem Erfassungsbetrieb soll das Vorhandensein der Anhängevorrichtung an dem Kraftfahrzeug erkannt werden. Der Erfassungsbetrieb wird dabei insbesondere bei jeder Aktivierung der Ultraschallsensorvorrichtung durchgeführt, um zu erkennen, ob die Anhängevorrichtung an dem Kraftfahrzeug angeordnet ist oder nicht. Insbesondere kann der Erfassungsbetrieb bereits vor dem Detektieren des Objekts im Umgebungsbereich des Kraftfahrzeugs durchgeführt werden. In Abhängigkeit davon, ob die Anhängevorrichtung an dem Kraftfahrzeug angeordnet ist oder nicht, kann der Bereich in welchem die Anhängevorrichtung positioniert werden kann, angepasst werden. Somit kann ein Kraftfahrzeug mit einer nachgerüsteten oder einer abnehmbaren Anhängerkupplung bedarfsgerecht und zuverlässig betrieben werden.

Bevorzugt wird zu Beginn des Erfassungsbetriebs ein vorbestimmter Referenzbereich für den Bereich angenommen. Zu Beginn des Erfassungsbetriebs kann es der Fall sein, dass nicht bekannt ist, ob sich an dem Kraftfahrzeug eine Anhängevorrichtung befindet oder nicht. Zudem kann es der Fall sein, dass es nicht bekannt ist, an welcher Position die Anhängevorrichtung angeordnet ist und/oder welche Abmessungen die Anhängevorrichtung aufweist. Aus diesem Grund kann für den Bereich, in dem die Anhängevorrichtung angeordnet werden kann, ein vorbestimmter Referenzbereich angenommen werden. Dies bietet zudem den Vorteil, da der Erkennungsbetrieb üblicherweise eine gewisse Zeit benötigt. Hierbei ist es beispielsweise möglich, während des Erfassungsbetriebs der Ultraschallsensorvorrichtung auch Objekte in dem Umgebungsbereich des Kraftfahrzeugs zu erfassen. Hierbei werden Sensorsignale bzw. Echos, die mit den Ultraschallsensoren empfangen werden und die in dem Referenzbereich liegen, nicht berücksichtigt. Auf diese Weise kann die Ultraschallsensorvorrichtung auch während des Erfassungsbetriebs zuverlässig genutzt werden, um ein Objekt in dem Umgebungsbereich des Kraftfahrzeugs zu erfassen.

In einer weiteren Ausführungsform wird zum Erkennen des Vorhandenseins einer Anhängevorrichtung während des Erfassungsbetriebes mittels des zumindest einen Ultraschallsensors eine vorbestimmte Anzahl von Messzyklen durchgeführt. Die automatische Erkennung des Vorhandenseins der Anhängevorrichtung basiert auf dem Erfassen von den Echosignalen, welche allerdings bevorzugt über einen vorbestimmten Zeitraum betrachtet werden. Hierzu können eine Mehrzahl von Messzyklen, in denen jeweils ein Sendesignal ausgesendet wird und das Echo des Sendesignals empfangen wird, durchgeführt werden. Beispielsweise können fünf, zehn oder mehr Messungen durchgeführt werden. Hierbei kann es auch vorgesehen sein, dass diese Messzyklen mit einem vorbestimmten Ultraschallsensor der Ultraschallsensorvorrichtung durchgeführt werden. Beispielsweise kann dies der Ultraschallsensor sein, der dem Bereich, in dem die Anhängevorrichtung angeordnet werden kann, zugeordnet ist. Bei nur einem einzigen Messzyklus könnte beispielsweise die Anhängevorrichtung aufgrund von Interferenzen nicht zuverlässig detektiert werden. Bei den nachfolgenden Messzyklen ist wiederum eine Reflexion vorhanden. Dies könnte dazu führen, dass die Anhängevorrichtung als reales Objekt erkannt wird und beispielsweise von einem Fahrerassistenzsystem ein Warnsignal, beispielsweise ein Dauerton, ausgegeben wird.

In einer weiteren Ausgestaltung wird in den jeweiligen Messzyklen anhand des zumindest einen Echos ein Abstand zu der Anhängevorrichtung ermittelt und der Referenzbereich wird anhand des ermittelten Abstands angepasst. Die Erkennung einer vorhandenen Anhängevorrichtung erfolgt anhand der Präsenz von Echos in einem vorbestimmten Abstandsbereich, insbesondere dem Referenzbereich. Dieser Referenzbereich kann beispielsweise eine Länge von 10 cm oder von 50 cm in Fahrzeuglängsrichtung hinter dem Kraftfahrzeug aufweisen. Ein Kugelkopf einer Anhängerkupplung kann beispielsweise einen Abstand in einem Bereich zwischen 7 cm und 10 cm aufweisen. Da aber üblicherweise Mehrfachreflexionen an dem Arm der Anhängerkupplung auftreten, kann der Bereich größer als der reale Abstand gewählt werden. Während der gesamten Dauer des Erfassungsbetriebs der Ultraschallsensorvorrichtung wird insbesondere der maximale Abstand, der über alle Messzyklen ermittelt wurde, bestimmt. Dieser maximale Abstand wird nun herangezogen, um den Referenzbereich anzupassen. Hierbei kann es auch vorgesehen sein, dass zu dem maximal ermittelten Abstand zusätzlich ein Toleranzwert addiert wird. Somit können Messungenauigkeiten ausgeglichen werden.

So wird bei einem Nichtvorhandensein der Anhängevorrichtung an dem Kraftfahrzeug der Bereich derart angepasst, dass dessen Fläche den Wert Null annimmt. Wenn während des Erfassungsbetriebs der Ultraschallsensorvorrichtung festgestellt wird, dass sich keine Anhängevorrichtung bzw. Anhängerkupplung an dem Kraftfahrzeug befindet, kann also kein Bereich beim Detektieren des Objekts ausgeblendet werden. Dies ist beispielsweise der Fall, wenn an dem Kraftfahrzeug keine Anhängevorrichtung nachgerüstet wurde oder wenn eine abnehmbare Anhängevorrichtung momentan nicht an dem Kraftfahrzeug angeordnet ist. In diesem Fall kann mittels der Ultraschallsensorvorrichtung der volle Detektionsbereich der einzelnen Ultraschallsensoren genutzt werden. Auf diese Weise kann ein Objekt in dem Umgebungsbereich des Kraftfahrzeugs zuverlässig erfasst werden.

Weiterhin ist es vorteilhaft, wenn der zumindest eine Ultraschallsensor während des Erfassungsbetriebs mit einer im Vergleich zu einem Normalbetrieb reduzierten Empfindlichkeit betrieben wird. Hierbei wird berücksichtigt, dass die Anhängevorrichtung bzw. die Anhängerkupplung üblicherweise nicht nur einen Reflexionspunkt am Kugelkopf aufweist, sondern auch zwischen dem Kugelkopf und dem Sensor mehrfach Reflexionen auftreten können. Es kann auch der Fall sein, dass der Arm zwischen dem Kugelkopf und dem Fahrzeugrahmen Reflexion verursacht. Weiterhin kann es der Fall sein, dass an dem Kugelkopf eine Abdeckkappe angeordnet ist, welche zu mehreren Reflexionspunkten führt. Solche Reflexionspunkte bzw. Echos sollte auf ein Minimum herabgesetzt werden, da die Steuereinrichtung des Fahrerassistenzsystems üblicherweise nur eine begrenzte Anzahl von Echos verarbeiten kann. Ist diese Anzahl bereits durch die Reflexionen an der Anhängerkupplung selbst erschöpft, kann ein eventuell zusätzlich vorhandenes Objekt nicht mehr erfasst werden. Um dies zu vermeiden, kann die Empfindlichkeit zumindest eines der Ultraschallsensoren derart verändert werden, dass so wenig wie möglich Echos durch die Anhängerkupplung erfasst werden. Dies kann innerhalb der jeweiligen Fahrzeugapplikation insbesondere ein einziges Mal unter Berücksichtigung möglicher Positionierungen der Anhängevorrichtung bezüglich des Kraftfahrzeugs erfolgen.

In einer Ausführungsform unterbleibt zum Ausblenden des Bereichs beim Detektieren des Objekts eine Auswertung zumindest eines Echos, welches dem Bereich zugeordnet wird. Mit anderen Worten werden die Echos des Sendesignals, die dem Bereich, in welchem die Anhängevorrichtung angeordnet werden kann, zugeordnet sind, nicht berücksichtigt. Diese können beispielsweise bei der Auswertung der Echos bzw. der Empfangssignale der Ultraschallsensoren mittels der Steuereinrichtung nicht weiter verarbeitet werden. Es kann vorgesehen sein, dass diese Echos entsprechend herausgefiltert werden. Auf diese Weise kann bei einem Fahrzeug, an welchem eine Anhängevorrichtung angeordnet ist, zudem der Umgebungsbereich zuverlässig auf das Vorhandensein eines Hindernisses untersucht werden.

In einer weiteren Ausführungsform wird zum Ausblenden des Bereichs beim Detektieren des Objekts ein dem Bereich zugeordneter Ultraschallsensor der Mehrzahl von Ultraschallsensoren deaktiviert. Hier kann beispielsweise ein Ultraschallsensor, der hinter bzw. über der Anhängevorrichtung angeordnet ist, komplett deaktiviert werden. Somit kann auf einfache Weise verhindert werden, dass durch das Sendesignal des Ultraschallsensors, der nahe an der Anhängevorrichtung angeordnet ist, Reflexionen erzeugt werden, die fälschlicherweise als reales Objekt interpretiert werden.

Bevorzugt wird der Erfassungsbetrieb durch ein Einlegen eines Rückwärtsgangs aktiviert. Um zu erkennen, ob sich an dem Kraftfahrzeug die Anhängevorrichtung befindet, bietet sich das Einlegen des Rückwärtsgangs als Trigger-Zeitpunkt an. Zusätzliche Aktivierungsmöglichkeiten des Erfassungsbetriebs, wie beispielsweise die Aktivierung des Erfassungsbetriebs mittels eines entsprechenden Tasters, der beispielsweise von dem Fahrer bedient werden kann, können ebenso vorgesehen sein. Dabei kann auch ein entsprechender Taster bzw. eine Bedientaste vorgesehen sein, mittels welcher eine akustische Ausgabe des Fahrerassistenzsystems stumm geschaltet wird. Weiterhin kann bei dem Einlegen des Rückwärtsgangs davon ausgegangen werden, dass sich das Fahrzeug bewegt, und dass es sich rückwärts bewegt. Diese Informationen können bei dem Erfassen des Objekts zudem berücksichtigt werden. Zudem kann es vorgesehen sein, dass die Ultraschallsensorvorrichtung bei einem Gangwechsel von dem Rückwärtsgang in einen anderen Gang wieder zurückgesetzt wird, so dass bei jedem neuen Einlegen des Rückwärtsgangs eine neue automatische Erkennung des Vorhandenseins der Anhängevorrichtung durchgeführt werden kann.

In einer weiteren Ausgestaltung wird im Betrieb der Ultraschallsensorvorrichtung überprüft, ob zumindest ein Echo zumindest eines Ultraschallsensors der Mehrzahl von Sensoren dem Beriech zuzuordnen ist. Wenn in dem Erfassungsbetrieb bereits der Bereich bestimmt wurde, in dem Echos ausgeblendet werden, kann im nachfolgenden Normalbetrieb der Ultraschallsensorvorrichtung weiterhin überprüft werden, ob Echos empfangen werden, welche diesem Bereich zuzuordnen sind. Ist dies der Fall, wird der Bereich beibehalten. Ist dies nicht der Fall, kann der Bereich derart angepasst werden, dass seine Fläche den Wert Null annimmt. Der Bereich kann also bei der Detektion des Objekts nicht berücksichtigt werden. Somit steht beispielsweise für den Fall, in dem eine abnehmbare Anhängevorrichtung abgenommen wurde und dies während des Erfassungsbetriebs nicht erkannt wurde, der volle Detektionsbereich zur Verfügung.

Eine erfindungsgemäße Ultraschallsensorvorrichtung umfasst eine Mehrzahl von Ultraschallsensoren, wobei zumindest einer der Ultraschallsensoren dazu ausgelegt ist, zum Detekieren eines Objekts in einem Umgebungsbereich des Kraftfahrzeugs in zumindest einem Messzyklus ein Sendesignal auszusenden und zumindest ein Echo des Sendesignals zu empfangen. Zudem umfasst die Ultraschallsensorvorrichtung eine Steuervorrichtung, welche dazu ausgelegt ist, einen Bereich zum Anordnen einer Anhängevorrichtung des Kraftfahrzeugs bei dem Detektieren des Objekts auszublenden. Die Steuereinrichtung ist zudem dazu ausgelegt, die Ultraschallsensorvorrichtung für eine vorbestimmte zeitliche Dauer in einem Erfassungsbetrieb zu betreiben und in dem Erfassungsbetrieb ein Vorhandensein der Anhängevorrichtung an dem Kraftfahrzeug anhand des zumindest einen empfangenen Echos zu erkennen und den Bereich in Abhängigkeit von dem Vorhandensein der Anhängevorrichtung anzupassen. Die Ultraschallsensorvorrichtung umfasst bevorzugt eine ungerade Anzahl an Ultraschallsensoren. Die Ultraschallsensorvorrichtung kann also beispielsweise drei, fünf oder sieben Ultraschallsensoren aufweisen.

Ein erfindungsgemäßes Fahrerassistenzsystem umfasst eine erfindungsgemäße Ultraschallsensorvorrichtung. Das Fahrerassistenzsystem kann beispielsweise als Parkassistenzsystem ausgebildet sein. Weiterhin kann das Fahrerassistenzsystem als ACC(Adaptive Cruise Control)-System ausgelegt sein.

Ein erfindungsgemäßes Kraftfahrzeug umfasst ein erfindungsgemäßes Fahrerassistenzsystem und eine insbesondere abnehmbare Anhängevorrichtung. Das Kraftfahrzeug ist insbesondere als Personenkraftwagen ausgebildet. Die Anhängevorrichtung kann eine Anhängerkupplung sein. Diese Anhängevorrichtung kann auch nach der Auslieferung des Kraftfahrzeugs angebracht sein. Dabei kann es auch vorgesehen sein, dass in dem Erfassungsbetrieb der Ultraschallsensorvorrichtung erfasst wird, ob andere Träger, beispielsweise Fahrradträger oder dergleichen, an dem Kraftfahrzeug angeordnet sind. Es kann auch überprüft werden, ob Rammleisten an dem Kraftfahrzeug angeordnet ist.

Bevorzugt ist ein Ultraschallsensor der Ultraschallsensorvorrichtung derart an einem Heckbereich des Kraftfahrzeugs angeordnet, dass er bei einer Projektion ein eine Horizontalebene zur zumindest im Wesentlichen auf einer Längsachse der im Heckbereich angeordneten Anhängevorrichtung liegt. Gerade bei einer derartigen Ausgestaltung kann die erfindungsgemäße Ultraschallsensorvorrichtung besonders vorteilhaft genutzt werden. Bei einer derartigen Ausgestaltung ist insbesondere ein geringer Abstand zwischen diesem einen Ultraschallsensor und der Anhängevorrichtung gegeben.

Die mit Bezug auf das erfindungsgemäße Verfahren vorgestellten bevorzugten Ausführungsformen und deren Vorteile gelten entsprechend für die erfindungsgemäße Ultraschallsensorvorrichtung, das erfindungsgemäße Fahrerassistenzsystem sowie das Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug gemäß einer Ausführungsform der vorliegenden Erfindung, welches ein Fahrerassistenzsystem mit einer Ultraschallsensorvorrichtung aufweist; und
- Fig. 2: ein Flussdiagramm eines Verfahrens gemäß einer Ausführungsform der vorliegenden Erfindung.

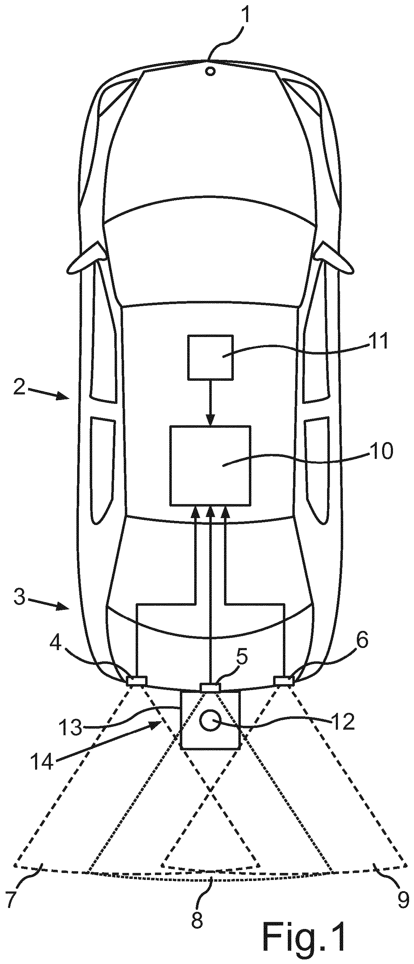

Fig. 1 zeigt ein Kraftfahrzeug 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst ein Fahrerassistenzsystem 2. Das Fahrerassistenzsystem 2 umfasst wiederum eine Ultraschallsensorvorrichtung 3. Die Ultraschallsensorvorrichtung 3 umfasst im vorliegenden Ausführungsbeispiel drei Ultraschallsensoren 4, 5, 6. Zudem umfasst die Ultraschallsensorvorrichtung 3 eine Steuereinrichtung 10, die beispielsweise durch ein Steuergerät (Electronic Control Unit, ECU) des Kraftfahrzeugs 1 gebildet sein kann.

In dem vorliegenden Ausführungsbeispiel sind die Ultraschallsensoren 4, 5, 6 in einem Heckbereich 14 des Kraftfahrzeugs 1 angeordnet sind. Die Ultraschallsensoren 4, 5, 6 können beispielweise in oder an einem Stoßfänger angeordnet sein. Die Ultraschallsensoren 4, 5, 6 sind dazu ausgelegt, ein Objekt in einem Umgebungsbereich des Kraftfahrzeugs 1 zu erfassen. Zu diesem Zweck können die Ultraschallsensoren 4, 5, 6 ein Sendesignal aussenden. Zudem sind die Ultraschallsensoren 4, 5, 6 dazu ausgelegt, das von dem Objekt reflektierte Sendesignal in Form eines Echos zu empfangen. Anhand der Laufzeit zwischen dem Aussenden des Sendesignals und dem Empfangen des Echos kann der Abstand zu dem Objekt bestimmt werden.

In Fig. 1 sind zudem die Detektionsbereiche 7, 8, 9 der jeweiligen Ultraschallsensoren 4, 5, 6 gezeigt. Die Erfassungsbereiche 7, 8, 9 sind beispielsweise durch die Sendekeulen der Ultraschallsensoren 4, 5, 6 gebildet. Der Ultraschallsensor 4 weist den Detektionsbereich 7 auf, der Ultraschallsensor 5 weist den Detektionsbereich 8 auf und der Ultraschallsensor 6 weist den Detektionsbereich 9 auf. Vorliegend sind die Ultraschallsensoren 4, 5, 6 über eine entsprechende Datenleitung zur Datenübertragung mit der Steuereinrichtung 10 verbunden. Hierbei werden keine weiteren Fahrzeuginformationen, wie beispielsweise die aktuelle Geschwindigkeit oder die Fahrtrichtung des Kraftfahrzeugs an die Steuereinrichtung 10 übertragen.

Das Kraftfahrzeug 1 umfasst zudem eine Anhängevorrichtung 12. Diese Anhängevorrichtung 12 kann beispielsweise eine Anhängerkupplung sein. Die Anhängevorrichtung 12 kann eine Anhängerkupplung sein, die nach der Auslieferung des Kraftfahrzeugs 1 an dem Kraftfahrzeug 1 angeordnet wurde. Bei der Anhängevorrichtung 12 kann es sich auch um eine abnehmbare Anhängerkupplung handeln. Je nach Position der Anhängevorrichtung 12 ist der Detektionsbereich eines der Ultraschallsensoren 4, 5, 6 eingeschränkt. In dem vorliegenden Ausführungsbeispiel ist der Detektionsbereich 8 des mittleren Ultraschallsensors 5 durch die Anhängevorrichtung 12 eingeschränkt.

Die Steuereinrichtung 10 ist dazu ausgelegt, einen Bereich 13 zu bestimmen, in welchem die Anhängevorrichtung 12 angeordnet werden kann. Dieser Bereich 13 kann beispielsweise anhand der Echosignale der Ultraschallsensoren 4, 5, 6 bestimmt werden. Hierzu kann beispielsweise die Laufzeit der Sendesignale und/oder eine Amplitude der empfangenen Echos berücksichtigt werden. Auf diese Weise kann der Bereich 13 bestimmt werden, in welchem die Anhängevorrichtung 12 gegebenenfalls angeordnet ist. Wenn ein Objekt in dem Umgebungsbereich des Kraftfahrzeugs 1 erfasst werden soll, kann dieser Bereich 13 ausgeblendet werden. Weiterhin ist es vorgesehen, dass der Bereich 13 in einem Erfassungsbetrieb der Ultraschallsensorvorrichtung 3 angepasst wird.

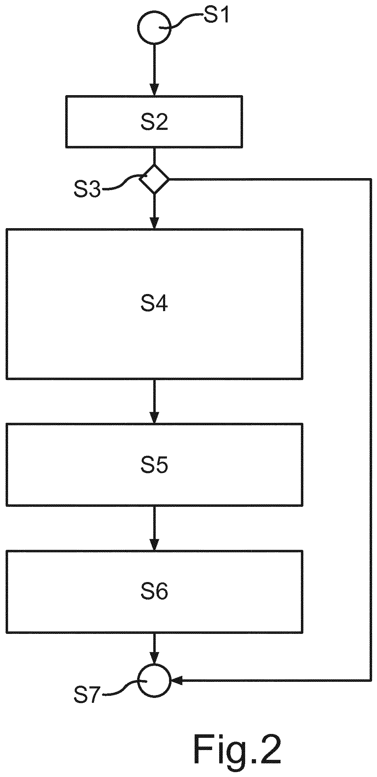

Fig. 2 zeigt ein Flussdiagramm eines Verfahrens zum Betreiben der Ultraschallsensorvorrichtung 3 gemäß einer Ausführungsform der vorliegenden Erfindung. Das Verfahren wird zunächst in einem Schritt S1 gestartet. Anschließend wird in einem Schritt S2 überprüft, ob ein Aktivierungssignal für den Erfassungsbetrieb der Ultraschallsensorvorrichtung 3 vorliegt. Das Aktivierungssignal kann beispielsweise durch eine Eingabeeinrichtung 11 des Kraftfahrzeugs 1 bereitgestellt werden. Beispielsweise kann die Eingabeeinrichtung 11 einen Taster umfassen, der von dem Fahrer oder einem Fahrzeuginsassen bedient werden kann. Alternativ oder zusätzlich ist es bevorzugt vorgesehen, dass das Aktivierungssignal beim Einlegen des Rückwärtsgangs bereitgestellt wird.

In einem Schritt S3 wird überprüft, ob das Aktivierungssignal vorhanden ist. Wenn das Aktivierungssignal nicht vorhanden ist, wird das Verfahren in dem Schritt S7 beendet. Ist das Aktivierungssignal vorhanden, wird das Verfahren mit dem Schritt S4 fortgesetzt. In dem Schritt S4 wird zunächst ein Referenzbereich für den Bereich 13 vorgegeben, in dem die Anhängevorrichtung 12 angeordnet werden kann. Der Bereich 13 kann beispielsweise eine Länge von 50 cm aufweisen, wobei die Länge ausgehend von der Karosserie des Kraftfahrzeugs 1 entlang der Längsachse des Kraftfahrzeugs 1 gemessen wird. Die Breite des Bereichs 13 kann ebenfalls 50 cm betragen. Im Erfassungsbetrieb der Ultraschallsensorvorrichtung 3 werden eine Mehrzahl von Messzyklen durchgeführt. Beispielsweise können zehn Messzyklen mit den Ultraschallsensoren 4, 5, 6 durchgeführt werden. In den jeweiligen Messzyklen wird ein Abstand zwischen dem Kraftfahrzeug 1 und der Anhängevorrichtung 12 bestimmt. Nach jeder Messung kann der Maximalwert für den Abstand gespeichert werden. Beispielsweise werden in einem ersten Messzyklus keine Echos bestimmt. In einem zweiten Messzyklus wird als Abstand zu der Anhängevorrichtung 12 ein Abstand von 20 cm bestimmt. Dieser Abstand wird als maximaler Abstand gespeichert. In einem dritten Messzyklus kann beispielsweise ein Abstand von 28 cm bestimmt werden. Dieser Abstand wird als neuer maximaler Abstand gespeichert. Der Abstand von 20 cm wird also überschrieben. Insgesamt wird der maximale Abstand, über die einzelnen Messzyklen bestimmt. In den einzelnen Messzyklen kann es auch vorgesehen sein, dass die Ultraschallsensoren 4, 5, 6 mit einer im Vergleich zu einem Normalbetrieb reduzierten Empfindlichkeit betrieben werden.

Anschließend wird das Verfahren in einem Schritt S5 fortgeführt. Hierbei wird der Referenzbereich in Abhängigkeit von dem maximal ermittelten Abstand zu der Anhängevorrichtung 12 angepasst. Dabei kann es auch vorgesehen sein, dass ein zusätzlicher Toleranzwert zu dem maximal ermittelten Abstand addiert wird. So können beispielsweise zu dem maximalen Abstand von 28 cm einige Zentimeter addiert werden. In einem Schritt S6 werden die Abmessungen für den Bereich 13 wieder auf den Referenzbereich gesetzt. Anschließend wird das Verfahren in dem Schritt S7 beendet.

Mit dem Verfahren kann somit zuverlässig überprüft werden, ob eine Anhängevorrichtung 12 an dem Kraftfahrzeug 1 angeordnet ist. Ist keine Anhängevorrichtung 12 bzw. Anhängerkupplung an dem Kraftfahrzeug 1 vorhanden, so kann der auszublendende Bereich, derart angepasst werden, dass dieser den Wert Null annimmt. Somit stehen die kompletten Detektionsbereiche 7, 8, 9 der Ultraschallsensoren 4, 5, 6 zur Verfügung.

Weiterhin ist je nach Positionierung der Anhängevorrichtung 12 eine zusätzliche Erkennung von dem Objekt möglich, sofern die Anhängevorrichtung 12 an sich den Detektionsbereich 7, 8, 9 des jeweiligen Sensors 4, 5, 6 nicht vollständig verdeckt. Auf diese Weise kann das Kraftfahrzeug 1 zuverlässig betrieben werden und Objekte im Umgebungsbereich des Kraftfahrzeugs 1 erkannt werden.

## Patentansprüche

1. Verfahren zum Betreiben einer Ultraschallsensorvorrichtung (3) eines Kraftfahrzeugs (1), bei welchem mittels zumindest eines Ultraschallsensors (4, 5, 6) einer Mehrzahl von Ultraschallsensoren (4, 5, 6) der Ultraschallsensorvorrichtung (3) zum Detektieren eines Objekts in einem Umgebungsbereich des Kraftfahrzeugs (1) in zumindest einem Messzyklus ein Sendesignal ausgesendet wird und zumindest ein Echo des Sendesignals empfangen wird sowie mittels einer Steuereinrichtung (10) ein Bereich (13) zum Anordnen einer Anhängevorrichtung (12) des Kraftfahrzeugs (1) bei dem Detektieren des Objekts ausgeblendet wird, wobei die Ultraschallsensorvorrichtung (3) für eine vorbestimmte zeitliche Dauer in einem Erfassungsbetrieb betrieben wird, in welchem ein Vorhandensein der Anhängevorrichtung (12) an dem Kraftfahrzeug (1) anhand des zumindest einen empfangenen Echo erkannt wird und der Bereich (13) in Abhängigkeit von dem Vorhandensein der Anhängevorrichtung (12) angepasst wird, **dadurch gekennzeichnet, dass** zu Beginn des Erfassungsbetriebs ein vorbestimmter Referenzbereich für den Bereich (13) zum Anordnen der Anhängevorrichtung (12) angenommen wird.

2. Verfahren nach Anspruch 1,
**dadurch gekennzeichnet, dass**
zum Erkennen des Vorhandenseins der Anhängevorrichtung (12) während des Erfassungsbetriebs mittels des zumindest einen Ultraschallsensors (4, 5, 6) eine vorbestimmte Anzahl von Messzyklen durchgeführt wird.

3. Verfahren nach Anspruch 2,
**dadurch gekennzeichnet, dass**
in den jeweiligen Messzyklen anhand des zumindest einen Echos ein Abstand zu der Anhängevorrichtung (12) ermittelt wird und der Referenzbereich anhand des ermittelten Abstands angepasst wird.

4. Verfahren nach einem der vorhergehenden Ansprüche,
**dadurch gekennzeichnet, dass**
bei einem Nichtvorhandensein der Anhängevorrichtung (12) an dem Kraftfahrzeug (1) der Bereich (13) derart angepasst wird, dass dessen Fläche den Wert Null annimmt.

5. Verfahren nach einem der vorhergehenden Ansprüche,
**dadurch gekennzeichnet, dass**
der zumindest eine Ultraschallsensor (4, 5, 6) während des Erfassungsbetriebs mit einer im Vergleich zu einem Normalbetrieb reduzierten Empfindlichkeit betrieben wird.

6. Verfahren nach einem der vorhergehenden Ansprüche,
**dadurch gekennzeichnet, dass**
zum Ausblenden des Bereichs (13) beim Detektieren des Objekts eine Auswertung zumindest eines Echos, welches dem Bereich (13) zugeordnet wird, unterbleibt.

7. Verfahren nach einem der vorhergehenden Ansprüche,
**dadurch gekennzeichnet, dass**
zum Ausblenden des Bereichs (13) beim Detektieren des Objekts ein dem Bereich (13) zugeordneter Ultraschallsensor (4, 5, 6) der Mehrzahl von Ultraschallsensoren (4, 5, 6) deaktiviert wird.

8. Verfahren nach einem der vorhergehenden Ansprüche,
**dadurch gekennzeichnet, dass**
der Erfassungsbetrieb durch ein Einlegen eines Rückwärtsgangs des Kraftfahrzeugs (1) aktiviert wird.

9. Verfahren nach einem der vorhergehenden Ansprüche,
**dadurch gekennzeichnet, dass**
im Betrieb der Ultraschallsensorvorrichtung (3) überprüft wird, ob zumindest ein Echo zumindest eines Ultraschallsensors (4, 5, 6) der Mehrzahl von Ultraschallsensoren (4, 5, 6) dem Bereich zuzuordnen ist.

10. Ultraschallsensorvorrichtung (3) für ein Kraftfahrzeug (1), mit einer Mehrzahl von Ultraschallsensoren (4, 5, 6), wobei zumindest einer der Ultraschallsensoren (4, 5, 6) dazu ausgelegt ist, zum Detektieren eines Objekts in einem Umgebungsbereich des Kraftfahrzeugs (1) in zumindest einem Messzyklus ein Sendesignal auszusenden und zumindest ein Echo des Sendesignals zu empfangen, und mit einer Steuereinrichtung (10), welche dazu ausgelegt ist, einen Bereich (13) zum Anordnen einer Anhängevorrichtung (12) des Kraftfahrzeugs (1) bei dem Detektieren des Objekts auszublenden,
wobei die Steuereinrichtung (10) dazu ausgelegt ist, die Ultraschallsensorvorrichtung (3) für eine vorbestimmte zeitliche Dauer in einem Erfassungsbetrieb zu betreiben und in dem Erfassungsbetrieb ein Vorhandensein der Anhängevorrichtung (12) an dem Kraftfahrzeug (1) anhand des zumindest einen empfangenen Echo zu erkennen und den Bereich (13) in Abhängigkeit von dem Vorhandensein der Anhängevorrichtung (12) anzupassen, **dadurch gekennzeichnet, dass** zu Beginn des Erfassungsbetriebs ein vorbestimmter Referenzbereich für den Bereich (13) zum Anordnen der Anhängevorrichtung (12) angenommen wird.

11. Ultraschallsensorvorrichtung (3) nach Anspruch 10,
**dadurch gekennzeichnet, dass**
die Ultraschallsensorvorrichtung (3) eine ungerade Anzahl an Ultraschallsensoren (4, 5, 6) aufweist.

12. Fahrassistenzsystem (2) mit einer Ultraschallsensorvorrichtung (3) nach Anspruch 10 oder 11.

13. Kraftfahrzeug (1) mit einem Fahrassistenzsystem (2) nach Anspruch 12 und mit einer insbesondere abnehmbaren Anhängevorrichtung (12).

14. Kraftfahrzeug (1) nach Anspruch 13,
**dadurch gekennzeichnet, dass**
ein Ultraschallsensor (4, 5, 6) der Ultraschallsensorvorrichtung (3) derart an einem Heckbereich (14) des Kraftfahrzeugs (1) angeordnet ist, dass er bei einer Projektion in eine Horizontalebene zumindest im Wesentlichen auf einer Längsachse der im Heckbereich (15) des Kraftfahrzeugs (1) angeordneten Anhängevorrichtung (12) liegt.

## Claims

1. Method for operating an ultrasonic sensor device (3) of a motor vehicle (1), in which, by means of at least one ultrasonic sensor (4, 5, 6) of a plurality of ultrasonic sensors (4, 5, 6) of the ultrasonic sensor device (3), a transmitted signal is emitted in at least one measuring cycle to detect an object in a surrounding region of the motor vehicle (1) and at least one echo of the transmitted signal is received and, by means of a control device (10), a region (13) for the arrangement of a towing device (12) of the motor vehicle (1) is masked out during the detection of the object, wherein the ultrasonic sensor device (3) is operated for a predetermined time interval in a detection mode, in which a presence of the towing device (12) on the motor vehicle (1) is detected by using the at least one received echo, and the region (13) is adapted depending on the presence of the towing device (12), **characterized in that** at the start of the detection mode, a predetermined reference region is assumed for the region (13) for the arrangement of the towing device (12).

2. Method according to Claim 1,
**characterized in that**
to detect the presence of the towing device (12) during the detection mode by means of the at least one ultrasonic sensor (4, 5, 6), a predetermined number of measuring cycles is carried out.

3. Method according to Claim 2,
**characterized in that**
in the respective measuring cycles, by using the at least one echo, a distance to the towing device (12) is determined and the reference region is adapted by using the distance determined.

4. Method according to one of the preceding claims,
**characterized in that**
during an absence of the towing device (12) on the motor vehicle (1), the region (13) is adapted in such a way that its area assumes the value zero.

5. Method according to one of the preceding claims,
**characterized in that**
during the detection mode, the at least one ultrasonic sensor (4, 5, 6) is operated with a reduced sensitivity as compared with normal operation.

6. Method according to one of the preceding claims,
**characterized in that**
in order to mask out the region (13) during the detection of the object, an evaluation of at least one echo which is associated with the region (13) is suppressed.

7. Method according to one of the preceding claims,
**characterized in that**
in order to mask out the region (13) during the detection of the object, an ultrasonic sensor (4, 5, 6) of the plurality of ultrasonic sensors (4, 5, 6) associated with the region (13) is deactivated.

8. Method according to one of the preceding claims,
**characterized in that**
the detection mode is activated by an engagement of a reverse gear of the motor vehicle (1).

9. Method according to one of the preceding claims,
**characterized in that**
during the operation of the ultrasonic sensor device (3), a check is made as to whether at least one echo from at least one ultrasonic sensor (4, 5, 6) of the plurality of ultrasonic sensors (4, 5, 6) is to be assigned to the region.

10. Ultrasonic sensor device (3) for a motor vehicle (1), having a plurality of ultrasonic sensors (4, 5, 6), wherein at least one of the ultrasonic sensors (4, 5, 6) is designed to emit a transmitted signal in at least one measuring cycle to detect an object in a surrounding region of the motor vehicle (1) and to receive at least one echo of the transmitted signal, and having a control device (10), which is designed to mask out a region (13) for the arrangement of a towing device (12) of the motor vehicle (1) during the detection of the object,
wherein the control device (10) is designed to operate the ultrasonic sensor device (3) for a predetermined time interval in a detection mode and, in the detection mode, to detect a presence of the towing device (12) on the motor vehicle (1) by using the at least one received echo, and to adapt the region (13) depending on the presence of the towing device (12), **characterized in that** at the start of the detection mode, a predetermined reference region is assumed for the region (13) for the arrangement of the towing device (12).

11. Ultrasonic sensor device (3) according to Claim 10,
**characterized in that**
the ultrasonic sensor device (3) has an odd number of ultrasonic sensors (4, 5, 6).

12. Driver assistance system (2) having an ultrasonic sensor device (3) according to Claim 10 or 11.

13. Motor vehicle (1) having a driver assistance system (2) according to Claim 12 and having an in particular removable towing device (12).

14. Motor vehicle (1) according to Claim 13,
**characterized in that**
an ultrasonic sensor (4, 5, 6) of the ultrasonic sensor device (3) is arranged on a rear region (14) of the motor vehicle (1) in such a way that in a projection in a horizontal plane, it is located at least substantially along a longitudinal axis of the towing device (12) arranged in the rear region (15) of the motor vehicle (1).

## Revendications

1. Procédé pour faire fonctionner un arrangement de détection à ultrasons (3) d'un véhicule automobile (1), avec lequel, dans au moins un cycle de mesure, un signal d'émission est émis et au moins un écho du signal d'émission est reçu au moyen d'au moins un détecteur à ultrasons (4, 5, 6) d'une pluralité de détecteurs à ultrasons (4, 5, 6) de l'arrangement de détection à ultrasons (3) destiné à détecter un objet dans une zone d'environnement du véhicule automobile (1) et une zone (13) destinée à disposer un arrangement d'attelage (12) du véhicule automobile (1) est masquée lors de la détection de l'objet au moyen d'un dispositif de commande (10), l'arrangement de détection à ultrasons (3) fonctionnant pendant une durée prédéterminée dans un régime de détection, dans lequel une présence de l'arrangement d'attelage (12) au niveau du véhicule automobile (1) est reconnue à l'aide de l'au moins un écho reçu et la zone (13) est adaptée en fonction de la présence de l'arrangement d'attelage (12), **caractérisé en ce qu'**au début du régime de détection, une zone de référence prédéterminée est supposée pour la zone (13) destinée à disposer l'arrangement d'attelage (12).

2. Procédé selon la revendication 1, **caractérisé en ce qu'**en vue de reconnaître la présence de l'arrangement d'attelage (12) pendant le régime de détection au moyen de l'au moins un détecteur à ultrasons (4, 5, 6), un nombre prédéterminé de cycles de mesure sont exécutés.

3. Procédé selon la revendication 2, **caractérisé en ce que** dans les cycles de mesure respectifs, un écart par rapport à l'arrangement d'attelage (12) est déterminé à l'aide de l'au moins un écho et la zone de référence est adaptée à l'aide de l'écart déterminé.

4. Procédé selon l'une des revendications précédentes, **caractérisé en ce que** dans le cas où l'arrangement d'attelage (12) n'est pas présent au niveau du véhicule automobile (1), la zone (13) est adaptée de telle sorte que sa surface prend la valeur zéro.

5. Procédé selon l'une des revendications précédentes, **caractérisé en ce que** l'au moins un détecteur à ultrasons (4, 5, 6), pendant le régime de détection, fonctionne avec une sensibilité réduite par rapport à un fonctionnement normal.

6. Procédé selon l'une des revendications précédentes, **caractérisé en ce que** pour masquer la zone (13) lors de la détection d'un objet, une interprétation d'au moins un écho qui est associé à la zone (13) n'a pas lieu.

7. Procédé selon l'une des revendications précédentes, **caractérisé en ce que** pour masquer la zone (13) lors de la détection de l'objet, un détecteur à ultrasons (4, 5, 6) de la pluralité de détecteurs à ultrasons (4, 5, 6) qui est associé à la zone (13) est désactivé.

8. Procédé selon l'une des revendications précédentes, **caractérisé en ce que** le régime de détection est activé en engageant une marche arrière du véhicule automobile (1).

9. Procédé selon l'une des revendications précédentes, **caractérisé en ce que** lors du fonctionnement de l'arrangement de détection à ultrasons (3), un contrôle est effectué afin de vérifier si au moins un écho d'au moins un détecteur à ultrasons (4, 5, 6) de la pluralité de détecteurs à ultrasons (4, 5, 6) est à associer à la zone.

10. Arrangement de détection à ultrasons (3) pour un véhicule automobile (1), comprenant une pluralité de détecteurs à ultrasons (4, 5, 6), au moins l'un des détecteurs à ultrasons (4, 5, 6) étant conçu pour émettre un signal d'émission et recevoir au moins un écho du signal d'émission en vue de détecter un objet dans une zone d'environnement du véhicule automobile (1) dans au moins un cycle de mesure, et comprenant un dispositif de commande (10) qui est conçu pour masquer une zone (13) destinée à disposer un arrangement d'attelage (12) du véhicule automobile (1) lors de la détection de l'objet, le dispositif de commande (10) étant conçu pour faire fonctionner l'arrangement de détection à ultrasons (3) pendant une durée prédéterminée dans un régime de détection et, dans le régime de détection, reconnaître une présence de l'arrangement d'attelage (12) au niveau du véhicule automobile (1) à l'aide de l'au moins un écho reçu et adapter la zone (13) en fonction de la présence de l'arrangement d'attelage (12), **caractérisé en ce qu'**au début du régime de détection, une zone de référence prédéterminée est supposée pour la zone (13) destinée à disposer l'arrangement d'attelage (12).

11. Arrangement de détection à ultrasons (3) selon la revendication 10, **caractérisé en ce que** l'arrangement de détection à ultrasons (3) possède un nombre impair de détecteurs à ultrasons (4, 5, 6).

12. Système d'assistance à la conduite (2) comprenant un arrangement de détection à ultrasons (3) selon la revendication 10 ou 11.

13. Véhicule automobile (1) équipé d'un système d'assistance à la conduite (2) selon la revendication 12 et comprenant un arrangement d'attelage (12) notamment amovible.

14. Véhicule automobile (1) selon la revendication 13, **caractérisé en ce qu'**un détecteur à ultrasons (4, 5, 6) de l'arrangement de détection à ultrasons (3) est disposé au niveau d'une zone arrière (14) du véhicule automobile (1) de telle sorte que lors d'une projection dans un plan horizontal, il se trouve au moins sensiblement sur un axe longitudinal de l'arrangement d'attelage (12) disposé dans la zone arrière (15) du véhicule automobile (1).
